# EUROPEAN PATENT APPLICATION

(11) **EP 4 534 875 A1**
(43) Date of publication of application: **09.04.2025**
(21) Application number: 23811815.2
(22) Date of filing: 23.05.2023
(51) Int. Cl.: F16J 15/38, F16J 15/34

(54) **MECHANICAL TOOL**

(30) Priority: 25.05.2022 JP 2022084967
(71) Applicant: Eagle Industry Co., Ltd., Minato-ku Tokyo 105-8587 (JP)
(72) Inventor: KATORI, Hikaru, Tokyo 105-8587 (JP); HISHIKAWA, Takao, Tokyo 105-8587 (JP); KANEZAWA, Daiki, Tokyo 105-8587 (JP)
(74) Representative: Seifert, Ruth
(86) International application number: PCT/JP2023/019171
(87) International publication number: WO 2023/228943

(57) **Abstract**

There is provided a mechanical seal capable of appropriately setting the surface pressure between sliding surfaces. A mechanical seal 1 includes a seal ring 21 held by a casing 20 with an elastic body 22 interposed between the seal ring 21 and the casing 20. The casing 20 includes an axial wall 20a extending in an axial direction along a peripheral surface of the seal ring 21, and a radial wall 20b extending in a radial direction along a back surface 21f of the seal ring 21. The elastic body 22 includes an axial portion 221 sandwiched between the peripheral surface of the seal ring 21 and the axial wall 20a of the casing 20, and a radial portion 222 sandwiched between the back surface 21f of the seal ring 21 and the radial wall 20b of the casing 20. The elastic body 22 further includes a tapered portion 223 which extends from the axial portion 221 to a back surface position of the seal ring 21 such that the tapered portion 223 overlaps with the back surface of the seal ring 21 in an axial directional view.

## Description

### {TECHNICAL FIELD}

The present invention relates to a mechanical seal, for example, a mechanical seal that seals a rotating shaft.

### {BACKGROUND ART}

A mechanical seal is mounted and used between a housing of a fluid device and a rotating shaft disposed to penetrate through the housing, and has the function of reducing friction occurring between sliding surfaces and preventing the leakage of a sealed fluid by allowing sliding contact in a circumferential direction between the sliding surface of a stationary seal ring fixed to a stationary-side casing attached to the housing and the sliding surface of a rotating seal ring that is fixed to a rotating-side casing attached to the rotating shaft and that rotates.

In a typical mechanical seal, for example, as described in Patent Citation 1, a seal member is disposed between the stationary seal ring and the stationary-side casing, and sealability between the stationary seal ring and the stationary-side casing is ensured. The stationary seal ring is disposed to be movable in an axial direction with respect to the stationary-side casing, and is biased toward a rotating seal ring side by biasing means.

In addition, the rotating seal ring is press-fitted into the rotating-side casing with a cup gasket interposed therebetween. Specifically, the rotating-side casing includes an axial wall extending in a tubular shape in the axial direction; a radial wall extending in an annular shape in a radially inward direction from a back surface-side end portion of the axial wall; and a fixed wall extending in the axial direction from a radially inner end portion of the radial wall and fixed to the rotating shaft. The cup gasket includes an axial portion sandwiched between an outer peripheral surface of the rotating seal ring and an inner peripheral surface of the axial wall of the rotating-side casing, and a radial portion sandwiched between a back surface of the rotating seal ring and a front surface of the radial wall of the rotating-side casing. Accordingly, sealability and fixing force between the rotating-side casing and the rotating seal ring are ensured.

### {CITATION LIST}

### {Patent Literature}

Patent Citation 1: WO 2019/163726 A (Page 5, FIG. 1)

### {SUMMARY OF INVENTION}

### {Technical Problem}

In the mechanical seal of Patent Citation 1, since the axial portion and the radial portion of the cup gasket are disposed in a compressed state between the rotating-side casing and the rotating seal ring, sealability and fixation are excellent. However, for example, in the case of ensuring even higher sealability and fixation, when the rotating seal ring is press-fitted into the rotating-side casing, the axial portion of the elastic body is compressed in a radial direction between the outer peripheral surface of the rotating seal ring and the inner peripheral surface of the axial wall of the casing, the axial portion bulges further toward a back surface side than the radial portion of the elastic body, the bulged axial portion comes into contact with the radial wall of the casing first, and the radial portion separates from the radial wall in the axial direction, which is a risk. Accordingly, when the mechanical seal is assembled, the elastic force of the cup gasket acts against the biasing force of the biasing means on a stationary seal ring side, and it is difficult to appropriately set the surface pressure between the sliding surfaces of the stationary seal ring and the rotating seal ring, which is a problem.

The present invention has been made in view of such problems, and an object of the present invention is to provide a mechanical seal capable of appropriately setting the surface pressure between sliding surfaces.

### {Solution to Problem}

In order to solve the foregoing problems, a mechanical seal according to the present invention is a mechanical seal including a seal ring held by a casing with an elastic body interposed between the seal ring and the casing, wherein the casing includes an axial wall extending in an axial direction along a peripheral surface of the seal ring, and a radial wall extending in a radial direction along a back surface of the seal ring, the elastic body includes an axial portion sandwiched between the peripheral surface of the seal ring and the axial wall of the casing, and a radial portion sandwiched between the back surface of the seal ring and the radial wall of the casing, and the elastic body further includes a tapered portion which is formed between a peripheral surface of the axial portion and a back surface of the radial portion and which extends from the axial portion to a back surface position of the seal ring such that the tapered portion overlaps with the back surface of the seal ring in an axial directional view. According to the aforesaid feature of the present invention, when the seal ring is press-fitted into the casing, the elastic body escapes into a gap between the tapered portion and the casing, so that the seal ring can be properly installed in a state where the back surface of the radial portion is brought into contact with the radial wall, and the surface pressure between sliding surfaces can be appropriately set.

It may be preferable that the tapered portion includes a flat surface. According to this preferable configuration, the tapered portion easily comes into smooth contact with the radial wall of the casing.

It may be preferable that the tapered portion includes two tapered surfaces. According to this preferable configuration, while a gap between the casing and the elastic body is reduced, the elastic body is efficiently elastically deformed in the gap.

It may be preferable that the tapered portion has an inner diameter side end which is positioned between the axial portion and a radial center of the seal ring in a radial width of the seal ring. According to this preferable configuration, the gap between the casing and the elastic body can be reduced.

It may be preferable that a corner portion of the seal ring covered by the elastic body is chamfered. According to this preferable configuration, a part of the elastic body that is elastically deformed is disposed in a gap between the corner portion of the seal ring and the elastic body.

It may be preferable that the corner portion is chamfered to a larger extent than other corner portions of the seal ring. According to this preferable configuration, the gap in which a part of the elastic body that is elastically deformed is disposed can be ensured to a large extent.

It may be preferable that a cutout portion is formed at a tip portion of the peripheral surface of the axial portion. According to this preferable configuration, a part of the elastic body that is elastically deformed is disposed in a gap between the cutout portion and the casing.

### {BRIEF DESCRIPTION OF DRAWINGS}

FIG. 1 is a cross-sectional view illustrating a mechanical seal according to a first embodiment of the present invention.
FIG. 2 is a cross-sectional view illustrating a cup gasket before the mechanical seal is assembled in the first embodiment.
FIG. 3 is a cross-sectional view illustrating a state where the cup gasket is fitted to a rotating-side casing, and is a view describing dimensions and the like of the rotating-side casing and the cup gasket in the first embodiment.
FIG. 4 is a cross-sectional view illustrating a press-fitting in-progress state where a rotating seal ring to which the cup gasket is externally fitted is press-fitted into the rotating-side casing in the first embodiment.
FIG. 5 is a cross-sectional view illustrating a press-fitting complete state where the rotating seal ring to which the cup gasket is externally fitted is press-fitted into the rotating-side casing in the first embodiment.
FIG. 6 is a cross-sectional view illustrating a cup gasket of a mechanical seal according to a second embodiment of the present invention.

### {DESCRIPTION OF EMBODIMENTS}

Modes for implementing a mechanical seal according to the present invention will be described below based on embodiments.

### {First embodiment}

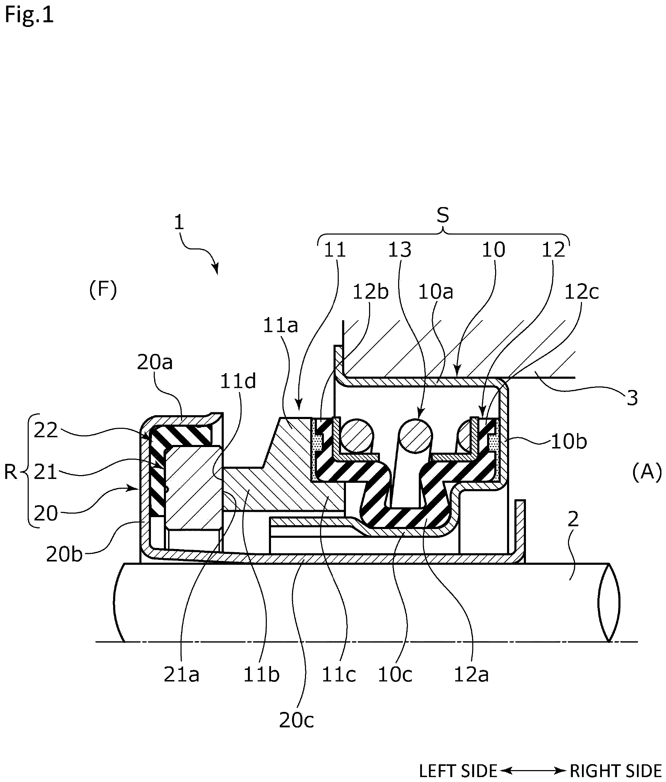

A mechanical seal according to a first embodiment of the present invention will be described with reference to FIGS. 1 to 5. Hereinafter, the left side of the drawing sheet and the right side of the drawing sheet of FIG. 1 will be described as a left side and a right side, respectively.

As illustrated in FIG. 1, a mechanical seal 1 is an inside mechanical seal that seals a sealed fluid F attempting to leak from a radially outer side toward a radially inner side. Incidentally, a space on the radially inner side of a stationary seal ring 11 and a rotating seal ring 21 will be described as an atmosphere A side, and a space on the radially outer side of the stationary seal ring 11 and the rotating seal ring 21 will be described as a sealed fluid F side.

The mechanical seal 1 of the present embodiment includes a stationary-side element S and a rotating-side element R.

The stationary-side element S mainly includes a stationary-side casing 10 fixed to a housing 3; the stationary seal ring 11 having an annular shape and provided to be non-rotatable and movable in an axial direction inside the casing 10; a bellows 12 that seals a gap between the casing 10 and the stationary seal ring 11; and a spring 13 that biases the stationary seal ring 11 toward the rotating seal ring 21 to be described later.

The stationary-side casing 10 is an annular member having a substantially U-shaped cross section and being open toward the left side, and is formed by pressing and bending a thin metal plate. Incidentally, the stationary-side casing 10 is not limited in material or processing method, and may be, for example, a resin-molded article.

The stationary-side casing 10 mainly includes a first portion 10a having a tubular shape and extending in the axial direction along an inner peripheral surface of the housing 3; a second portion 10b having a circular annular shape and extending in a radially inward direction from a right end portion of the first portion 10a; and a third portion 10c having a tubular shape and extending from a radially inner end portion of the second portion 10b to the left side.

The stationary seal ring 11 includes a base portion 11a; a protrusion 11b having an annular shape and protruding in the axial direction from the radially inner side and a left surface side of the base portion 11a; and a protrusion 11c having an annular shape and protruding in the axial direction from the radially inner side and a right surface side of the base portion 11a. A surface of the protrusion 11b facing the rotating seal ring 21, which is a left surface, is a sliding surface 11d.

The bellows 12 includes a tubular portion 12a that is extendable and contractible in the axial direction; a flange portion 12b extending in a radially outward direction from a left end portion of the tubular portion 12a; and a flange portion 12c extending in the radially outward direction from a right end portion of the tubular portion 12a. The flange portion 12b is disposed at a step portion of the stationary seal ring 11 formed by the base portion 11a and the protrusion 11c. In addition, the flange portion 12c is disposed at a corner portion of the stationary-side casing 10 formed by the second portion 10b and the third portion 10c.

The spring 13 is a compression spring, and is disposed on the radially outer side of the tubular portion 12a of the bellows 12. A left end portion of the spring 13 presses a right surface of the base portion 11a of the stationary seal ring 11 with the flange portion 12b of the bellows 12 interposed therebetween, and a right end portion of the spring 13 presses the second portion 10b of the casing 10 with the flange portion 12c of the bellows 12 interposed therebetween.

The rotating-side element R mainly includes a rotating-side casing 20 fixed to a rotating shaft 2; the rotating seal ring 21 disposed inside the casing 20; and a cup gasket 22 as an elastic body disposed in a compressed state between the casing 20 and the rotating seal ring 21.

The rotating-side casing 20 is an annular member having a substantially J-shaped cross section and being open toward the right surface side, and is formed by pressing and bending a thin metal plate. Incidentally, the rotating-side casing 20 is not limited in material or processing method, and may be, for example, a resin-molded article.

The rotating-side casing 20 includes a first portion 20a as an axial wall having a cylindrical shape and extending in the axial direction; a second portion 20b as a radial wall having a circular annular shape and extending in the radially inward direction from a left end portion of the first portion 20a; and a third portion 20c having a cylindrical shape and extending from a radially inner end portion of the second portion 20b to the right side along the rotating shaft 2. Incidentally, in the present embodiment, the first portion 20a and the second portion 20b form substantially 90 degrees.

The rotating seal ring 21 has a rectangular cross section, and a right surface thereof, namely, a front surface of the rotating seal ring 21 is a flat sliding surface 21a. Incidentally, hereinafter, the right side and the left side of the rotating seal ring 21 may be referred to as a front surface side and a back surface side, respectively.

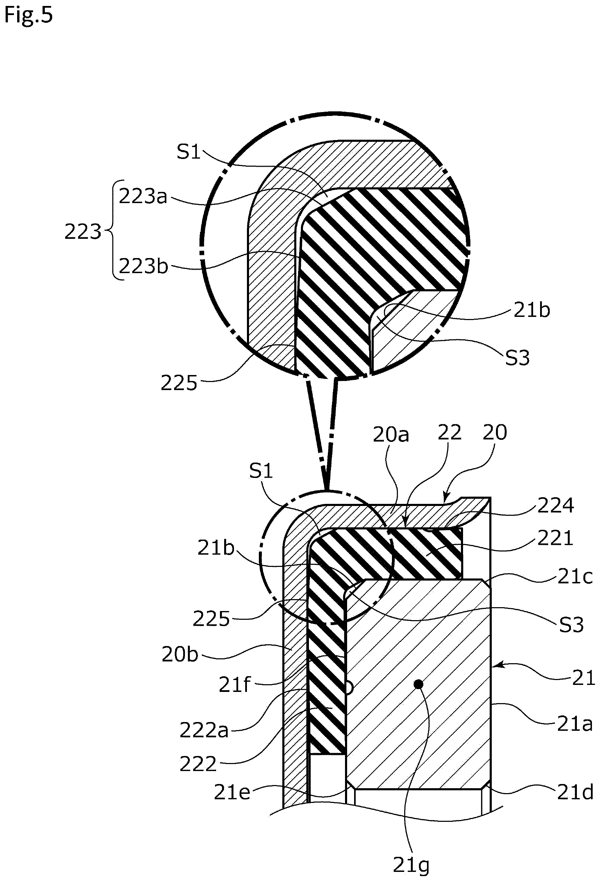

Referring to FIG. 5, in the rotating seal ring 21, a corner portion 21b on the radially outer side of a left surface, namely, a back surface of the rotating seal ring 21, a corner portion 21c on the radially outer side of the front surface, a corner portion 21d on the radially inner side of the front surface, and a corner portion 21e on the radially inner side of the back surface are chamfered. The corner portion 21b on the radially outer side of the back surface is chamfered to a larger extent than the other corner portions 21c to 21e. Incidentally, a back surface 21f of the rotating seal ring 21 which is a surface on the back surface side excluding the corner portions 21b and 21e is a flat surface in the present embodiment.

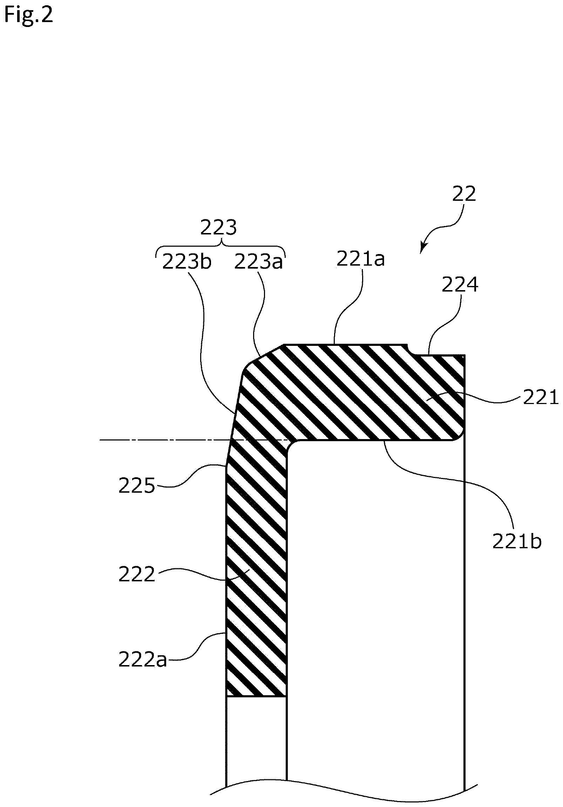

As illustrated in FIG. 2, the cup gasket 22 is an annular member made of an elastically deformable synthetic resin, and has an L-shaped cross section and includes an axial portion 221 having a tubular shape and extending in the axial direction, and a radial portion 222 having a circular annular shape and extending in the radially inward direction from a back surface-side end portion of the axial portion 221.

A tapered portion 223 is formed at a corner portion on the radially outer side of a back surface of the cup gasket 22 to taper toward the back surface side.

The tapered portion 223 includes a first inclined surface 223a as a flat tapered surface that tapers from an outer peripheral surface 221a of the axial portion 221 toward the back surface side, and a second inclined surface 223b as a flat tapered surface that further tapers from a back surface-side end portion of the first inclined surface 223a toward a back surface 222a of the radial portion 222.

A boundary portion 225 between the second inclined surface 223b and the back surface 222a of the radial portion 222 is disposed on the radially inner side of an inner peripheral surface 221b of the axial portion 221.

In addition, as illustrated in FIG. 5, the second inclined surface 223b extends to the back surface position of the back surface 21f of the rotating seal ring 21, namely, to a position where the second inclined surface 223b overlaps the back surface 21f of the rotating seal ring 21 in the axial direction. In addition, the boundary portion 225 is disposed on the radially outer side (namely, on an axial portion 221 side) of a radial center 21g of the rotating seal ring 21 at the back surface position of the back surface 21f of the rotating seal ring 21. Incidentally, hereinafter, a portion of the back surface 21f of the rotating seal ring 21, which is located on an axis passing through the radial center 21g of the rotating seal ring 21, may be simply referred to as a "radial center of the back surface 21f of the rotating seal ring 21".

In addition, a cutout portion 224 is formed at a tip portion on the front surface side of the axial portion 221. The cutout portion 224 is formed in an annular shape to be open on the radially outer side and the front surface side. Incidentally, the cutout portion 224 is not limited to an annular shape, and the cutout portions 224 may be provided at a plurality of locations in a circumferential direction.

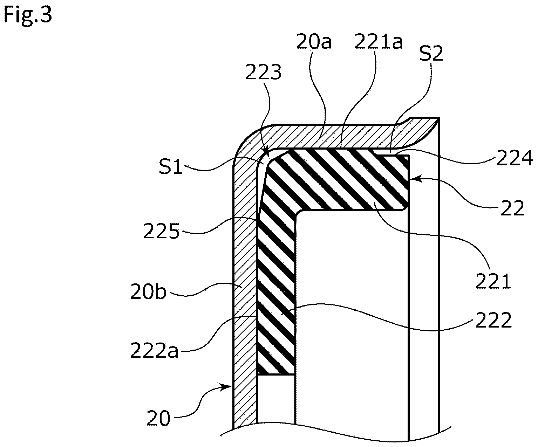

Referring to FIG. 3, a dimensional relationship between the rotating-side casing 20 and the cup gasket 22 and the like will be described. Here, an inner diameter of the rotating-side casing 20 and an outer diameter of the cup gasket 22 are substantially the same.

In a state where the cup gasket 22 alone is internally fitted to the rotating-side casing 20, the outer peripheral surface 221a of the axial portion 221 is in surface contact with an inner peripheral surface of the first portion 20a of the rotating-side casing 20, and the back surface 222a of the radial portion 222 is in surface contact with a front surface of the second portion 20b of the rotating-side casing 20.

In addition, a gap S1 is formed between the tapered portion 223 and a corner portion on the radially inner side of the rotating-side casing 20. In addition, a gap S2 is formed between the cutout portion 224 and the first portion 20a.

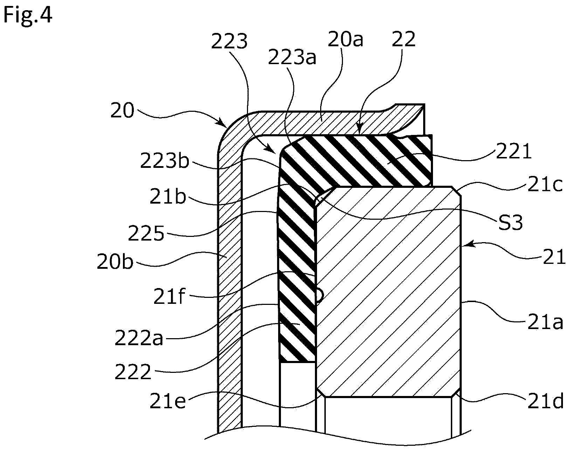

Next, the actual assembly of the rotating-side element R will be described using FIGS. 4 and 5. Here, an outer diameter of the rotating seal ring 21 is slightly larger than an inner diameter of the cup gasket 22.

As illustrated in FIG. 4, first, in a state where the cup gasket 22 is externally fitted to the rotating seal ring 21, the cup gasket 22 is press-fitted from the front surface side of the rotating-side casing 20 toward the back surface side. Since the axial portion 221 is compressed in the radial direction between the rotating seal ring 21 and the first portion 20a of the rotating-side casing 20, the axial portion 221 is elastically deformed to bulge in the axial direction.

In detail, the tapered portion 223 of the axial portion 221 bulges toward the back surface side. At this time, the second inclined surface 223b is located on the front surface side of the back surface 222a of the radial portion 222 and the boundary portion 225. In addition, the first inclined surface 223a of the tapered portion 223 bulges in the radially outward direction, but is located on the radially inner side of the inner peripheral surface of the first portion 20a of the rotating-side casing 20.

In addition, since the corner portion 21b of the rotating seal ring 21 surrounded by the cup gasket 22 is chamfered, in a state (not illustrated) where the cup gasket 22 is externally fitted to the rotating seal ring 21 but before being press-fitted into the rotating-side casing 20, a gap S3 is formed between a corner portion on the radially inner side between the axial portion 221 and the radial portion 222 forming substantially 90 degrees and the corner portion 21b of the rotating seal ring 21. A part of the cup gasket 22 that elastically deforms can escape into the gap S3, and the gap S3 becomes smaller than before the cup gasket 22 is press-fitted into the rotating-side casing 20.

In addition, in the state illustrated in FIG. 4, the boundary portion 225 is disposed at a back surface position on the axial portion 221 side of the radial center of the back surface 21f of the rotating seal ring 21.

As illustrated in FIG. 5, when the cup gasket 22 and the rotating seal ring 21 are further press-fitted into the rotating-side casing 20, the back surface 222a of the radial portion 222, the boundary portion 225, and a part on the radially inner side of the second inclined surface 223b of the tapered portion 223 come into contact with the second portion 20b of the rotating-side casing 20.

On the other hand, the radially outer side of the second inclined surface 223b of the tapered portion 223 is slightly separated from the second portion 20b of the rotating-side casing 20 toward the front surface side.

In addition, the first inclined surface 223a of the tapered portion 223 is slightly separated from the radially inner side of the first portion 20a of the rotating-side casing 20.

Incidentally, in the state illustrated in FIG. 5, since the axial portion 221 is elastically deformed to bulge in the axial direction, the gap S1 becomes smaller than in the state illustrated in FIG. 3. In addition, the vicinity of the cutout portion 224 of the axial portion 221 bulges toward the radially outer side to fill the gap S2.

Next, the assembly of the mechanical seal 1 will be described. After the stationary-side element S is assembled to the housing 3, the rotating-side element R illustrated in FIG. 5 is fixed to the rotating shaft 2 at a predetermined position in the axial direction to complete the assembly, so that the state illustrated in FIG. 1 is obtained.

As described above, the tapered portion 223 is formed in the cup gasket 22 to extend to the back surface position of the rotating seal ring 21 from the outer peripheral surface 221a of the axial portion 221 to the back surface 222a of the radial portion 222. Accordingly, when the rotating seal ring 21 is press-fitted into the rotating-side casing 20, the tapered portion 223 can escape into the gap S1 between the tapered portion 223 and the rotating-side casing 20, so that the rotating seal ring 21 can be properly installed in a state where the back surface 222a of the radial portion 222 is brought into contact with the second portion 20b. Therefore, the elastic force of the cup gasket 22 does not act on the surface pressure between the sliding surfaces 11d and 21a, and an appropriate surface pressure can be achieved by the biasing force of the spring 13.

In addition, since the second inclined surface 223b of the tapered portion 223 is a flat surface, the second inclined surface 223b easily comes into smooth contact with the second portion 20b of the rotating-side casing 20.

In addition, the tapered portion 223 includes two first inclined surface 223a and second inclined surface 223b. According to this configuration, since the tapered portion 223 is elastically deformable to bulge in both the axial direction and the radial direction, the cup gasket 22 is elastically deformable in the small gap S1 more efficiently compared to a case where only the second inclined surface 223b is provided.

In addition, since the cup gasket 22 is tapered toward the back surface side by the first inclined surface 223a, the cup gasket 22 is easily press-fitted into the rotating-side casing 20.

In addition, since the boundary portion 225 is disposed at a back surface position on the axial portion 221 side of the radial center of the back surface 21f of the rotating seal ring 21, the back surface 222a of the radial portion 222 that comes into contact with the second portion 20b of the rotating-side casing 20 can be ensured to a large extent. Namely, the gap S1 can be reduced.

In addition, since the corner portion 21b of the rotating seal ring 21 surrounded by the cup gasket 22 is chamfered, a part of the cup gasket 22 that elastically deforms can escape into the gap S3 formed between the cup gasket 22 and the corner portion 21b of the rotating seal ring 21.

In addition, since the corner portion 21b of the rotating seal ring 21 is chamfered to a larger extent than the other corner portions 21c to 21e, the gap S3 in which a part of the cup gasket 22 that is elastically deformable is disposed can be ensured to a large extent.

In addition, since the cutout portion 224 is formed at the tip portion on the front surface side of the axial portion 221, a part of the cup gasket 22 that elastically deforms can escape into the gap S2 between the cutout portion 224 and the rotating-side casing 20.

Incidentally, in the present embodiment, as illustrated in FIG. 4, the mode in which the rotating seal ring 21 to which the cup gasket 22 is externally fitted is press-fitted into the rotating-side casing 20 has been provided as an example; however, the present invention is not limited to this mode, and as illustrated in FIG. 3, in a state where the cup gasket 22 is attached to the rotating-side casing 20, the rotating seal ring 21 may be press-fitted into the cup gasket 22. Even in this case, since the tapered portion 223 does not project further toward the back surface side than the back surface 222a of the radial portion 222 and the boundary portion 225, the action of the elastic force of the cup gasket 22 on the rotating seal ring 21 can be suppressed.

In addition, since the second inclined surface 223b of the cup gasket 22 is inclined at substantially 10 degrees with respect to the back surface 222a of the radial portion 222, the gap S1 can be reduced, and sealability and fixation between the rotating seal ring 21 and the rotating-side casing 20 are excellent. Incidentally, from the viewpoint of ensuring excellent sealability and fixation while keeping the gap S1 remained, the second inclined surface 223b may be inclined at 1 to 30 degrees, preferably 2 to 10 degrees, in the axial direction with respect to the back surface 222a of the radial portion 222.

Incidentally, in the above description, the example in which, in the press-fitting complete state illustrated in FIG. 5, the back surface 222a of the radial portion 222, the boundary portion 225, and a part on the radially inner side of the second inclined surface 223b of the tapered portion 223 come into contact with the second portion 20b of the rotating-side casing 20 has been described; however, only the boundary portion 225 and the vicinity thereof in the radial direction may come into contact with the second portion 20b of the rotating-side casing 20, and most of the back surface 222a of the radial portion 222 may be very slightly separated from the second portion 20b of the rotating-side casing 20. In this case, since only a very slight gap occurs, the rotating-side element R is assembled by being fixed to the rotating shaft 2 at a predetermined position in the axial direction, so that the biasing force of the spring 13 of the stationary-side element S is not greatly affected.

In addition, in the present embodiment, the mode in which the inner diameter of the rotating-side casing 20 and the outer diameter of the cup gasket 22 are substantially the same and the outer diameter of the rotating seal ring 21 is slightly larger than the inner diameter of the cup gasket 22 has been provided as an example; however, the outer diameter of the cup gasket 22 may be slightly larger than the inner diameter of the rotating-side casing 20, and the outer diameter of the rotating seal ring 21 and the inner diameter of the cup gasket 22 may be substantially the same.

### {Second embodiment}

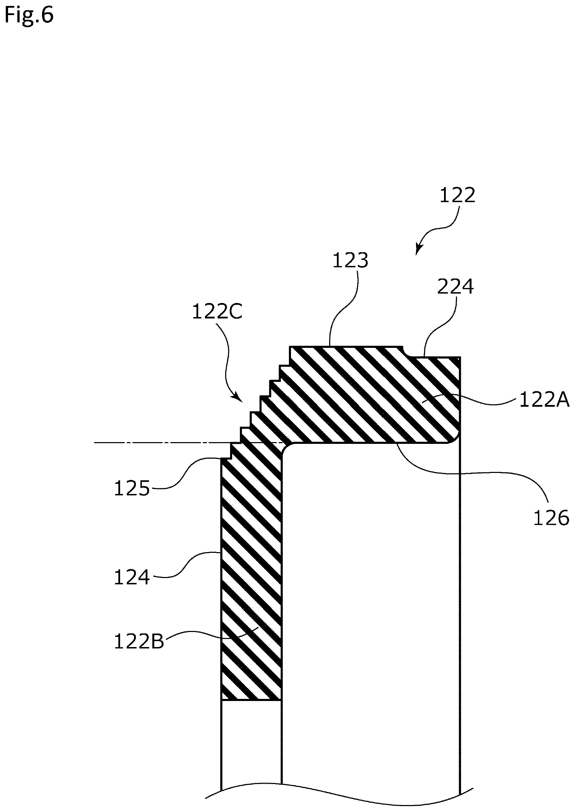

Next, a mechanical seal according to a second embodiment will be described with reference to FIG. 6. Incidentally, the description of configurations that are the same as and overlap with the configurations of the above-described embodiment will be omitted.

A cup gasket 122 of the second embodiment includes an axial portion 122A and a radial portion 122B, and a tapered portion 122C is formed at a corner portion on the radially outer side of a back surface of the cup gasket 122.

The tapered portion 122C is formed in a stepped shape to taper from an outer peripheral surface 123 of the axial portion 122A toward a back surface 124 of the radial portion 122B. A boundary portion 125 between the tapered portion 122C and the back surface 124 of the radial portion 122B is disposed on the radially inner side of an inner peripheral surface 126 of the axial portion 122A.

Accordingly, when the rotating seal ring 21 is press-fitted into the rotating-side casing 20, the tapered portion 122C can escape toward the back surface side in the axial direction, so that the rotating seal ring 21 can be properly installed in a state where the back surface 124 of the radial portion 122B is brought into contact with the second portion 20b of the rotating-side casing 20 (refer to FIG. 5).

The embodiments of the present invention have been described above with reference to the drawings, but the specific configurations are not limited to the embodiments, and changes or additions that are made without departing from the scope of the present invention are included in the present invention.

For example, in the first and second embodiments, the mode in which the rotating seal ring 21 is press-fitted and installed in the rotating-side casing 20 with the cup gasket interposed therebetween has been provided as an example; however, the stationary seal ring 11 may be press-fitted and installed in the stationary-side casing 10 with the cup gasket interposed therebetween.

In addition, in the first and second embodiments, the mode in which the seal ring to which the cup gasket is externally fitted is installed, namely, the mode in which the seal ring is installed on the radially inner side of the cup gasket has been provided as an example; however, the seal ring to which the cup gasket is internally fitted may be installed, namely, the seal ring may be installed on the radially outer side of the cup gasket.

In addition, in the first embodiment, the mode in which the tapered portion 223 includes two first inclined surface 223a and second inclined surface 223b has been provided as an example; however, the tapered portion 223 may include only the second inclined surface.

In addition, the mode in which the tapered portion is a flat surface in the first embodiment and has a stepped shape in the second embodiment has been provided as an example; however, the tapered portion may be a curved surface.

In the first and second embodiments, the mode in which the tapered portion extends to a back surface position on the axial portion side of the radial center of the back surface 21f of the rotating seal ring 21 has been provided as an example; however, the tapered portion may extend to the radial center of the back surface 21f of the rotating seal ring 21 or a back surface position beyond the radial center.

In addition, in the first and second embodiments, an inside mechanical seal has been described as an example; however, the present invention is not limited thereto, and may be applied to an outside mechanical seal.

In addition, the sealed fluid F may be any of a gas, a liquid, and a mixture of gas and liquid. In addition, a fluid on a leakage side is not limited to the atmosphere A, but may be any of a gas, a liquid, and a mixture of gas and liquid.

### {REFERENCE SIGNS LIST}

- 1: Mechanical seal
- 2: Rotating shaft
- 3: Housing
- 10: Stationary-side casing
- 11: Stationary seal ring
- 11d: Sliding surface
- 13: Spring
- 20: Rotating-side casing
- 20a: First portion (axial wall)
- 20b: Second portion (radial wall)
- 21: Rotating seal ring
- 21a: Sliding surface
- 21b to 21e: Corner portions
- 21f: Back surface
- 22: Cup gasket (elastic body)
- 122: Cup gasket (elastic body)
- 122A: Axial portion
- 122B: Radial portion
- 122C: Tapered portion
- 125: Boundary portion
- 221: Axial portion
- 222: Radial portion
- 223: Tapered portion
- 223a: First inclined surface
- 223b: Second inclined surface
- 224: Cutout portion
- 225: Boundary portion
- R: Rotating-side element
- S: Stationary-side element
- S1 to S3: Gaps

## Claims

1. A mechanical seal, comprising:
a seal ring held by a casing with an elastic body interposed between the seal ring and the casing,
wherein the casing includes an axial wall extending in an axial direction along a peripheral surface of the seal ring, and a radial wall extending in a radial direction along a back surface of the seal ring,
the elastic body includes an axial portion sandwiched between the peripheral surface of the seal ring and the axial wall of the casing, and a radial portion sandwiched between the back surface of the seal ring and the radial wall of the casing, and
the elastic body further includes a tapered portion which is formed between a peripheral surface of the axial portion and a back surface of the radial portion and which extends from the axial portion to a back surface position of the seal ring such that the tapered portion overlaps with the back surface of the seal ring in an axial directional view.

2. The mechanical seal according to claim 1,
wherein the tapered portion includes a flat surface.

3. The mechanical seal according to claim 1,
wherein the tapered portion includes two tapered surfaces.

4. The mechanical seal according to any one of claims 1 to 3,
wherein the tapered portion has an inner diameter side end which is positioned between the axial portion and a radial center of the seal ring in a radial width of the seal ring.

5. The mechanical seal according to claim 1,
wherein a corner portion of the seal ring covered by the elastic body is chamfered.

6. The mechanical seal according to claim 5,
wherein the corner portion is chamfered to a larger extent than other corner portions of the seal ring.

7. The mechanical seal according to claim 1,
wherein a cutout portion is formed at a tip portion of the peripheral surface of the axial portion.
